# EUROPÄISCHE PATENTANMELDUNG

(11) **EP 4 388 922 A2**
(43) Veröffentlichungstag der Anmeldung: **26.06.2024**
(21) Anmeldenummer: 23198353.7
(22) Anmeldetag: 19.09.2023
(51) Int. Cl.: A45C 5/00, A45C 5/03, A45C 13/26, A61B 50/31, B65D 25/28, A45C 7/00, A45C 13/18, A45C 13/28, A45C 13/00, A45C 5/02, A45C 13/10, A45C 13/42, B29C 45/16

(54) **PHOSPHORESZIERENDER ERSTE-HILFE-KOFFER, PHOSPHORESZIERENDER NOTFALLKOFFER, VERFAHREN ZUR HERSTELLUNG EINES PHOSPHORESZIERENDEN ERSTE-HILFE-KOFFERS, PHOSPHORESZIERENDEN NOTFALLKOFFERS**

(30) Priorität: 23.12.2022 EP 22216544; 23.01.2023 EP 23152967; 06.02.2023 EP 23155219; 17.02.2023 EP 23157243; 17.02.2023 EP 23157263; 17.02.2023 EP 23157300
(71) Anmelder: W. Söhngen GmbH, 65232 Taunusstein (DE)
(72) Erfinder: MAY, Melanie, 65193 Wiebaden (DE); ARNOLD, Pascal, 66265 Heusweiler (DE)
(74) Vertreter: Richardt Patentanwälte PartG mbB

(57) **Zusammenfassung**

Mindestens ein Teilbereich der erfindungsgemäßen Erste-Hilfe-Koffers (100) beinhaltet ein phosphoreszierendes Material. Bei dem Teilbereich handelt es sich um einen Bereich einer Wandung einer Kofferschale (10) oder die Wandung selbst bzw. die gesamte Kofferschale (10) und/oder zumindest einen Bereich eines anbringbaren Anbauteils, insbesondere eines funktionalen Elements des Notfallkoffers (100), wie bspw. Griff (20), Komponente des Griffs (20), Verschluss (40), Komponente des Verschlusses (40), wie zum Beispiel Betätigungselement des Verschlusses (40) oder Stapelzentriereinrichtungen (50). Durch das bevorzugt über mehrere Stunden anhaltende Nachleuchten des phosphoreszierenden Materials, ist der Erste-Hilfe-Koffer (100) auch bei schwacher Beleuchtung gut auffindbar. Indem nur Teilbereiche des Erste-Hilfe-Koffers (100) das phosphoreszierende Material beinhalten, werden die Herstellungskosten gesenkt. Durch nachträgliches Anbringen der phosphoreszierenden Anbauteile wird die Flexibilität ohne signifikante Änderung des Herstellungsprozesses erhöht. Phosphoreszierende funktionale Anbauteile erhöhen deren Auffindbarkeit für den behandelnden Ersthelfer. Metallisierte Oberflächenteilbereiche (60) erhöhen durch Reflektion des von den phosphoreszierenden Bauteilen ausgesandten Lichts die Sichtbarkeit des Erste-Hilfe-Koffers und/oder der funktionalen Anbauteile noch weiter.

## Beschreibung

Die Erfindung betrifft einen phosphoreszierenden Erste-Hilfe-Koffer, insbesondere einen phosphoreszierenden Notfallkoffer oder Verbandskasten. Sie betrifft auch ein Verfahren zur Herstellung eines phosphoreszierenden Erste-Hilfe-Koffers.

Unter Erste-Hilfe-Koffer wird hier vorliegend insbesondere verstanden ein Koffer oder Verbandskasten, der befüllt ist mit zumindest einem aus: Pflaster und Verbandsmaterial, Einmalhandschuhen, Erste-Hilfe-Scheren und Pinzetten, Hygienemundschutz, Hygienekleidung, Notduschen und Augenspülung, Desinfektionsmittel und Spender dazu, Defibrillatoren und Zubehör, sowie Beatmungsmasken. Ein Notfallkoffer ist vorliegend als unter den Begriff des Erste-Hilfe-Koffers im Sinne der Erfindung fallend anzusehen. Als Erste-Hilfe-Koffer sind vorliegend insbesondere diejenigen Erste-Hilfe-Koffer zu verstehen, welche die DIN-Normen 13157 oder 13169 erfüllen.

Die Erfindung betrifft insbesondere die Ausgestaltung von an den Erste-Hilfe-Koffer anbringbaren Anbauteilen.

Die Europäische Patentanmeldung mit dem Aktenzeichen EP23152967.8 beschreibt einen Erste-Hilfe-Koffer, der aus zwei Notfallkofferhälften besteht.

Im weiteren Stand der Technik sind Erste-Hilfe-Koffer bekannt, deren Sichtbarkeit durch Anbringen hochreflektierender oder fluoreszierender Aufkleber erhöht ist. Insbesondere das sog. "Erste Hilfe Kreuz", ein weißes Kreuz auf grünem oder rotem Grund, ist im Stand der Technik als hochreflektierender oder fluoreszierender Aufkleber auf Erste-Hilfe-Koffern angebracht.

Dies hat den Nachteil, dass für das Bekleben des Erste-Hilfe-Koffers ein zusätzlicher Arbeitsschritt in der Herstellung nötig ist. Zudem könnte eine entsprechende Beklebung von Anbauteilen mit komplexer Geometrie, wie Griffe oder Verschlüsse, nur mit hohem manuellen Aufwand realisiert werden. Darüber hinaus erhöhen hochreflektierende oder fluoreszierende Aufkleber die Sichtbarkeit nur während der Bestrahlung mit Licht. In nur schwach beleuchteten Bereichen und ohne Zuhilfenahme einer auf den Erste-Hilfe-Koffer gerichteten Lichtquelle, ist die erhöhte Sichtbarkeit nicht gegeben.

Es ist Aufgabe der Erfindung, einen verbesserten Erste-Hilfe-Koffer mit erhöhter Sichtbarkeit, insbesondere mit erhöhter Sichtbarkeit funktioneller Anbauteile, zu schaffen sowie ein Verfahren anzugeben, mit welchem ein solcher Erste-Hilfe-Koffer hergestellt werden kann.

Die Aufgabe wird durch einen Erste-Hilfe-Koffer mit den Merkmalen nach Anspruch 1 sowie durch ein Verfahren zur Herstellung eines Erste-Hilfe-Koffers nach Anspruch 10 gelöst.

Mindestens ein Teilbereich der erfindungsgemäßen Erste-Hilfe-Koffers beinhaltet ein phosphoreszierendes Material.

Bei dem Teilbereich handelt es sich um einen Bereich einer Wandung einer Kofferschale oder die Wandung selbst bzw. die gesamte Kofferschale und/oder zumindest einen Bereich eines anbringbaren Anbauteils, insbesondere eines funktionalen Elements des Erste-Hilfe-Koffers, wie bspw. Griff, Komponente des Griffs, Verschluss, Komponente des Verschlusses, wie zum Beispiel Betätigungselement des Verschluss oder auch Stapelzentriereinrichtungen. Ebenso ist denkbar, dass die Teilbereiche abgesehen von der Funktion des Phosphoreszierens eine ansonsten rein ästhetische Funktion besitzen, wie dies bspw. bei Einsatzteilen im Griff oder Zierleisten der Fall ist. Diese erhalten entsprechend erst durch die Erfindung einen signifikanten technischen Nutzen. Teilbereiche, die ein phosphoreszierendes Material beinhalten besitzen mehrere Vorteile. Durch das Nachleuchten, welches bevorzugt über mehrere Stunden anhält, ist der Erste-Hilfe-Koffer nachdem er Licht ausgesetzt wurde auch bei schwacher Beleuchtung oder im Dunkeln gut auffindbar, was insbesondere bei einem Stromausfall oder schwacher Beleuchtung von Vorteil ist. Indem nur Teilbereiche des Erste-Hilfe-Koffers das phosphoreszierende Material beinhalten, werden die Herstellungskosten gesenkt, da phosphoreszierende Materialien teurer sind als bspw. thermoplastische Kunststoffe, aus denen die Bauteile eines Erste-Hilfe-Koffers üblicherweise bestehen. Dies gilt ebenso, wenn das phosphoreszierende Material dem thermoplastischen Kunststoff vor der Herstellung zugesetzt wurde. Auch der Einsatz für militärische Zwecke ist besonders vorteilhaft, da keine Lichtquelle benötigt wird, um den Erste-Hilfe-Koffer bspw. bei Nachteinsätzen gut sehen zu können.

Gemäß vorteilhaften Ausführungsformen der Erfindung weist der Erste-Hilfe-Koffer zwei Kofferschalen auf und die Teilbereiche, welche das phosphoreszierende Material beinhalten sind an die Kofferschalen anbringbare Anbauteile. Üblicherweise sind die Kofferschalen und/oder die anbringbaren Anbauteile Spritzgussteile aus Kunststoff, wobei die Anbauteile nachträglich an die Kofferschalen angebracht werden. Beispielsweise können die Kofferschalen in einem ersten Spritzgussvorgang aus einem thermoplastischen Kunststoff, wie Acrylnitril-Butadien-Styrol oder Polypropylen, hergestellt werden. In einem zweiten Spritzgussvorgang können die anbringbaren Anbauteile aus dem gleichen thermoplastischen Kunststoff hergestellt werden, wobei diesem vor dem Spritzgussvorgang phosphoreszierendes Material zugesetzt wurde. So müssen die Herstellungsprozesse nicht aufwändig verändert werden, weil Kofferschalen und Anbauteile ohnehin durch Spritzguss hergestellt werden. Zudem werden so die Herstellungskosten durch den gezielten Einsatz des kostenintensiven phosphoreszierenden Materials gesenkt. Durch das nachträgliche Anbringen der phosphoreszierenden Anbauteile wird die Flexibilität in der Herstellung erhöht, da auf diese Weise verschiedene Teilbereiche des Erste-Hilfe-Koffers phosphoreszierend ausgestaltet werden können. Die Anbauteile sind bspw. über eine Schnappverbindung aus Kunststoff mit den Kofferschalen verbunden und/oder der Bereich des Anbauteils, der das phosphoreszierende Material beinhaltet, ist mit dem Anbauteil selbst über eine Schnappverbindung verbunden. Die Schnappverbindung kann so dimensioniert sein, dass sie manuell nicht lösbar ist.

Gemäß einer vorteilhaften Ausführungsform hierzu sind die anbringbaren Anbauteile zumindest aus einem der folgenden Elemente gewählt: Griff; Komponente des Griffs, insbesondere Einsatzteil; Verschluss; Komponente des Verschlusses, insbesondere Betätigungselement; Stapelzentriereinrichtung; Zierleiste. Die phosphoreszierende Ausgestaltung der genannten Anbauteile hat den Vorteil, dass die funktionalen Elemente, insbesondere der Griff und die Verschlüsse, auch bei schwacher Beleuchtung oder im Dunkeln mehrere Stunden lang gut sichtbar sind. Dem behandelnden Ersthelfer, Arzt oder sonstigem Bedienpersonal ist es durch die erhöhte Sichtbarkeit leichter und schneller möglich, die funktionalen Elemente aufzufinden.

Beinhalten der Griff und/oder eine Kofferschale phosphoreszierendes Material wird die Sichtbarkeit noch weiter erhöht und der Erste-Hilfe-Koffer ist selbst bei schwacher Beleuchtung auch aus größerer Entfernung sichtbar und lässt sich entsprechend schnell auffinden.

Weist das phosphoreszierende Material eine Nachleuchtdauer von mindestens 1 h, bevorzugt mindestens 2 h, besonders bevorzugt mindestens 3 h auf, ist die Sichtbarkeit der entsprechend ausgestalteten Teilbereiche über einen besonders langen Zeitraum erhöht. Beträgt der Massenanteil des phosphoreszierenden Materials in den Teilbereichen bzw. der Kofferschale mindestens 10 %, bevorzugt mindestens 30 % ist die Leuchtkraft besonders hoch, was wiederum die Sichtbarkeit des Erste-Hilfe-Koffers weiter verbessert.

Ist das phosphoreszierende Material ein Pigment, das Partikel aus SrAl2O4:Eu, Dy enthält, welche bevorzugt mittlere Durchmesser d₅₀ = 25 ± 4 µm und d₉₀ ≤ 60 µm aufweisen, lässt sich das phosphoreszierenden Material besonders einfach und zuverlässig mit einem thermoplastischen Kunststoff, wie bspw. Acrylnitril-Butadien-Styrol oder Polypropylen, mischen. Dies erleichtert die Herstellung des Ausgangsmaterials für das Formen der phosphoreszierenden anbringbaren Anbauteile bzw. der Kofferschalen. Zudem wird aufgrund der guten Mischbarkeit und Stabilität gegenüber Entmischung das Formen der phosphoreszierenden anbringbaren Anbauteile bzw. der Kofferschalen selbst vereinfacht und die Homogenität der fertig geformten Teile erhöht.

Ist der Erste-Hilfe-Koffer mit zumindest einem aus Pflaster und Verbandsmaterial, Einmalhandschuhen, Erste-Hilfe-Scheren und Pinzetten, Hygienemundschutz, Hygienekleidung, Notduschen und Augenspülung, Desinfektionsmittel und Spender dazu, Defibrillatoren und Zubehör oder Beatmungsmasken befüllt, können diese leicht auffindbar und gleichzeitig geschützt vor Kontaminationen vorgehalten werden.

Sind zumindest Oberflächenteilbereiche des Erste-Hilfe-Koffers metallisiert, wird die Sichtbarkeit durch die im Vergleich zur nicht metallisierten Oberfläche erhöhte Reflektivität weiter verbessert, da das von dem phosphoreszierenden Material abgegebene Licht in einem stärkeren Maße reflektiert wird, als dies bei einer üblichen Kunststoffoberfläche der Fall wäre.

Das erfindungsgemäße Verfahren zur Herstellung eines Erste-Hilfe-Koffers beinhaltet das Bereitstellen von zwei Kofferschalen und einem Griff, das Bereitstellen von an den Kofferschalen und/oder dem Griff anbringbaren Anbauteilen, das Verbinden der beiden Kofferschalen zu einem Erste-Hilfe-Koffer, das Anbringen des Griffs an eine Kofferschale, das Anbringen der anbringbaren Anbauteile an die Kofferschalen und/oder den Griff. Auf diese Weise wird die Flexibilität in der Herstellung erhöht, da verschiedene Teilbereiche des Erste-Hilfe-Koffers auch nachträglich noch phosphoreszierend ausgestaltet werden können. Dies kann erfolgen, ohne dass der vorherige Herstellungsprozess verändert werden muss.

Gemäß einer vorteilhaften Ausführungsform hierzu werden die Kofferschalen und der Griff in einem ersten Spritzgussvorgang aus einem thermoplastischen Kunststoff, bevorzugt aus einem Acrylnitril-Butadien-Styrol-Kunststoff, hergestellt. In einem zweiten Spritzgussvorgang werden die anbringbaren Anbauteile aus einem thermoplastischen Kunststoff, bevorzugt aus einem Acrylnitril-Butadien-Styrol-Kunststoff, hergestellt, wobei dem Kunststoff das phosphoreszierende Material vor dem Spritzgussvorgang zugesetzt wird. Auf diese Weise kann die bereits bestehende Infrastruktur, insbesondere die kostenintensiven Spritzgussformen, genutzt werden. Die Herstellung in zwei separaten Spritzgussvorgängen erleichtert zudem das gezielte reduzierte Einsetzen der im Vergleich zu thermoplastischen Kunststoffen hochpreisigen phosphoreszierenden Materialien.

Gemäß einer vorteilhaften Ausführungsform hierzu wird vor dem ersten Spritzgussvorgang dem thermoplastischen Kunststoff für die Herstellung der Kofferschalen und/oder des Griffs phosphoreszierendes Material zugesetzt. Dadurch können alle Teile des Erste-Hilfe-Koffers aus demselben Ausgangsmaterial geformt werden, was die Herstellung vereinfacht. Zudem ist die Sichtbarkeit eines mit diesem Verfahren hergestellten Erste-Hilfe-Koffers besonders hoch, da zusätzliche dem Ersthelfer, Arzt oder sonstigem Bedienpersonal zugewandte Bereiche phosphoreszieren.

Werden zusätzlich zumindest Oberflächenteilbereiche der Kofferschalen und/oder des Griffs metallisiert, ist die Sichtbarkeit des so hergestellten Erste-Hilfe-Koffers aufgrund der erhöhten Reflektivität der metallisierten Oberflächenteilbereiche noch höher.

Gemäß einer vorteilhaften Ausführungsform hierzu wird das Metallisieren durch die folgenden Schritte realisiert:
- Ätzen der Oberflächenteilbereiche des Erste-Hilfe-Koffers mit einer Lösung bestehend aus Chromsäure, Schwefelsäure und Wasser, wobei das Ätzen bei einer Temperatur von mind. 60 °C, bevorzugt bei 70 °C durchgeführt wird;
- Aktivieren der Oberflächenteilbereiche mit Palladium, wobei das Palladium kolloidal gelöst und von einer Schutzkolloidhülle umgeben ist oder ionisch vorliegt;
- Benetzen der Oberflächenteilbereiche mit einer Beschleunigerlösung, wobei die Beschleuniger-lösung so gewählt ist, dass sie ionisch vorliegendes Palladium reduziert oder im Fall von kolloidal gelöstem Palladium die das kolloidale Palladium umgebende Schutzkolloidhülle entfernt;
- Chemisches Abscheiden von Nickel auf den Oberflächenteilbereichen;
- Galvanisches Abscheiden von Kupfer auf den vernickelten Oberflächenteilbereichen;
- Galvanisches Abscheiden von Nickel auf den verkupferten Oberflächenteilbereichen;
- Galvanisches Abscheiden von Chrom auf den durch galvanisches Abscheiden vernickelten Oberflächenteilbereichen;
- Trocknen der Oberflächenteilbereiche, bevorzugt bei einer Temperatur von 67 °C,
wobei zwischen den einzelnen Schritten die Oberflächenteilbereiche mit Wasser, bevorzugt mit deionisiertem Wasser, gespült werden.

Auf diese Weise wird durch schichtweisen Aufbau eine besonders homogene Chromschicht als nach außen abschließende Schicht des metallisierten Bereichs erzeugt. Diese Chromschicht weist eine besonders hohe Reflektivität auf, was die Sichtbarkeit der phosphoreszierend ausgestalteten Teilbereiche noch weiter erhöht.

Im Übrigen lassen sich die auf den Erste-Hilfe-Koffer bezogenen Merkmale und Vorteile entsprechend auf die Verfahren übertragen, und umgekehrt, so dass an dieser Stelle auf weitere Wiederholungen verzichtet wird.

Nachfolgend wird die Erfindung unter Bezug auf die jeweilige Zeichnung näher beschrieben, wobei
- Fig. 1: eine perspektivische Ansicht einer ersten Ausführungsform des erfindungsgemäßen Erste-Hilfe-Koffers zeigt;
- Fig. 2: eine Vorderansicht des Erste-Hilfe-Koffer aus Fig. 1 zeigt; und
- Fig. 3: eine Vorderansicht einer zweiten Ausführungsform des erfindungsgemäßen Erste-Hilfe-Koffers zeigt.

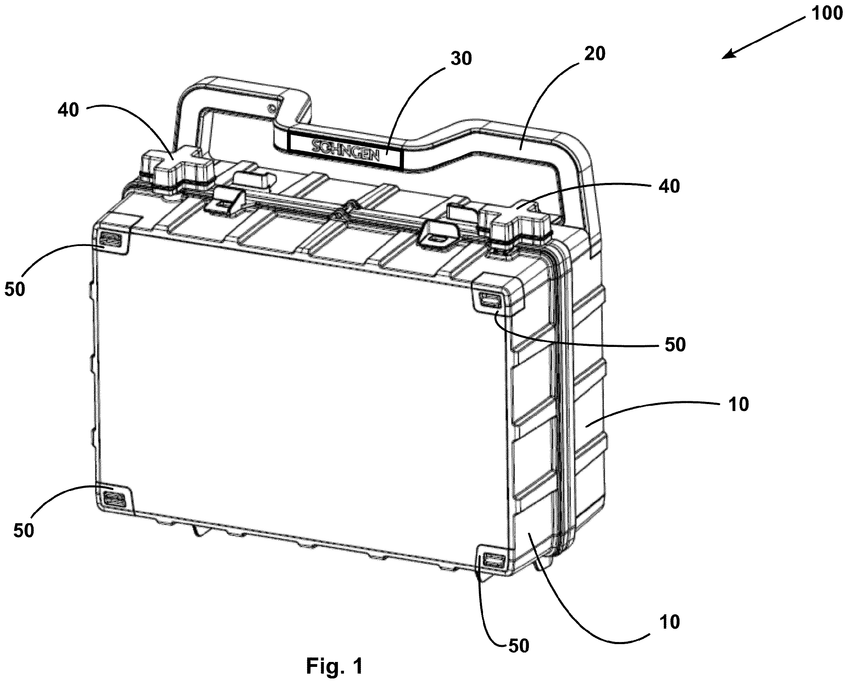

In Fig. 1 ist ein im Ganzen mit 100 bezeichneter erfindungsgemäßer Erste-Hilfe-Koffer dargestellt. Die Kofferschalen 10 beinhalten kein phosphoreszierendes Material. Hingegen beinhalten der Griff 20, das Einsatzteil 30, die Verschlüsse 40 und die Stapelzentriereinrichtungen 50 phosphoreszierendes Material. Die Ausgestaltung des Griffs 20 ist ausdrücklich nicht auf die in Fig. 1 gezeigte Form beschränkt. Anhand von Fig. 1 wird offensichtlich, dass bereits die phosphoreszierende Ausgestaltung einzelner Teilbereiche, insbesondere die phosphoreszierende Ausgestaltung der anbringbaren Anbauteile Griff 20, Einsatzteil 30, Verschlüsse 40 und Stapelzentriereinrichtungen 50 die Sichtbarkeit des Koffers erhöhen, selbst wenn dieser bspw. in einer Wandhalterung auf Augenhöhe befestigt ist, die sich auf der vom Betrachter abgewandten Seite des Erste-Hilfe-Koffers befindet. Der Griff 20 ist hier, verkürzt gesagt, in einer S-Form dargestellt. Denkbar sind ebenso andere Formen des Griffes 20, wie bspw. simple Henkelgriffe.

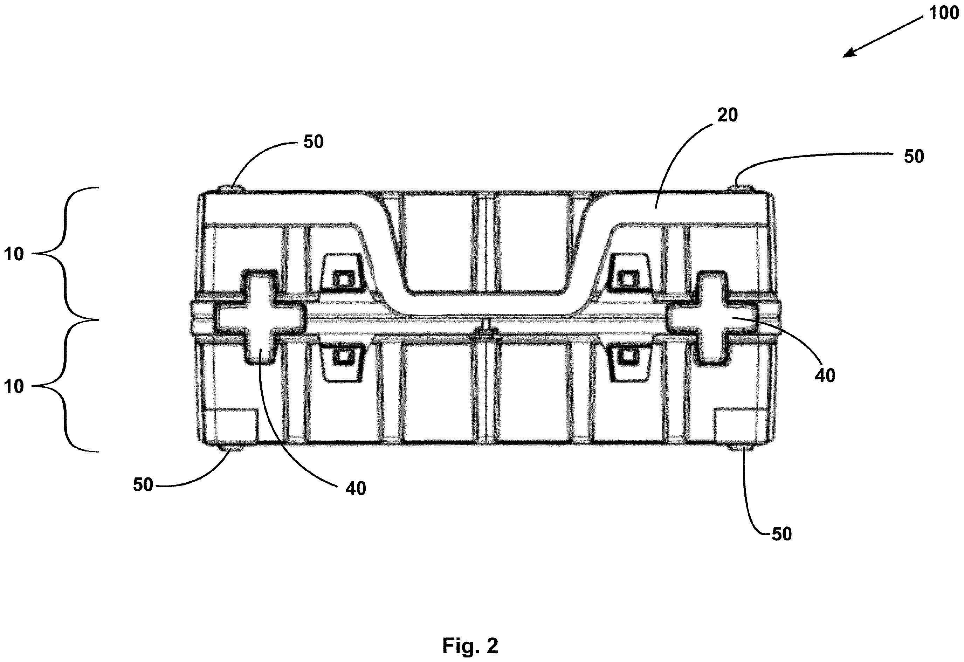

Fig. 2 verdeutlicht durch die Vorderansicht, dass der Griff 20, die Verschlüsse 40 und auch die Stapelzentriereinrichtungen 50 durch ihre phosphoreszierende Ausgestaltung die Sichtbarkeit des Koffers erhöhen, auch wenn dieser bspw. in einem Regal auf Augenhöhe liegt. Die Kofferschalen 10 beinhalten kein phosphoreszierendes Material. Das Einsatzteil 30 ist in Fig. 2 nicht zu sehen.

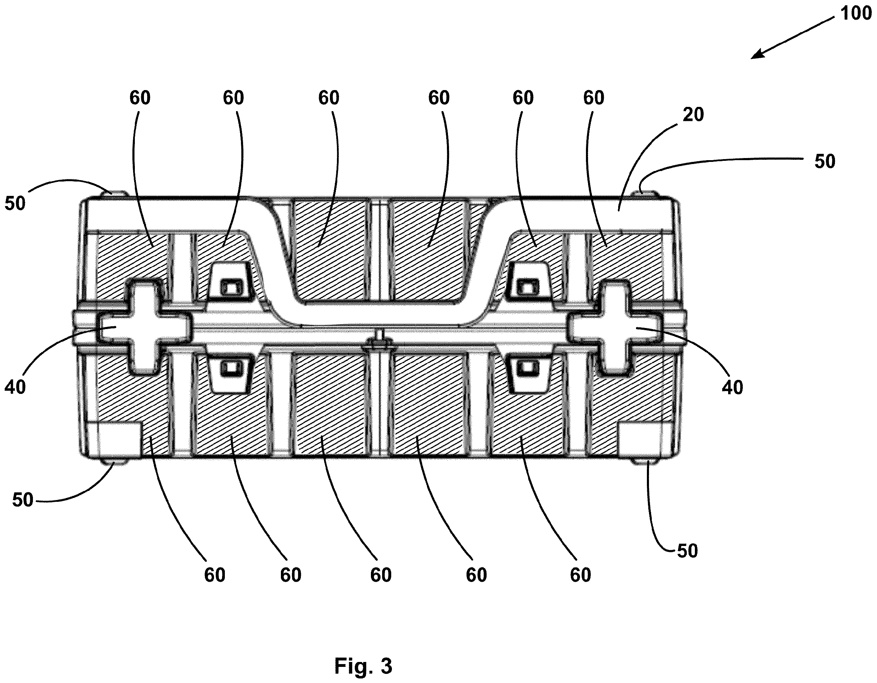

Fig. 3 zeigt einen Erste-Hilfe-Koffer 100, dessen Griff 20, Verschlüsse 40 und Stapelzentriereinrichtungen 50 phosphoreszierendes Material beinhalten. Das Einsatzteil 30 ist in Fig.3 nicht zu sehen. Die metallisierten Oberflächenteilbereiche 60 reflektieren das von den voranstehend genannten Anbauteilen ausgesandte Licht in noch stärkerem Maße als das bei üblichen Kunststoffoberflächen der Fall wäre und verbessern so die Sichtbarkeit des Erste-Hilfe-Koffers 100 im Allgemeinen und die Sichtbarkeit der Anbauteile im Speziellen. Ebenso ist denkbar, dass die Oberflächen von - bevorzugterweise erhabenen - Elementen, wie bspw. Schriftzüge "Erste-Hilfe", "Verbandszeug" oder Symbole, wie ein Erste-Hilfe-Kreuz metallisiert werden. Hierdurch heben sich diese Elemente von den umgebenden phosphoreszierenden Teilbereichen visuell ab und werden so für den Ersthelfer sichtbar, wodurch dieser schneller auf den Inhalt des Koffers schließen kann. Dies ist insbesondere bei phosphoreszierend ausgebildeten Kofferschalen denkbar, da hier besonders große Schrift- oder Symbolelemente mit metallisierter Oberfläche realisiert werden können. Aber auch im Griffbereich des Erste-Hilfe-Koffer könnte bspw. ein Erste-Hilfe-Kreuz mit metallisierter Oberfläche angeordnet sein, dass sich von einer phosphoreszierenden Wandung visuell absetzt und so gut für den behandelnden Ersthelfer sichtbar ist.

Zwar wurde die Erfindung unter Bezug auf bestimmte Ausführungsformen beschrieben, es sollte sich aber verstehen, dass die Erfindung auf diese Beispiele nicht beschränkt ist, und dass zahlreiche Abwandlungen vom Fachmann vorgesehen und erdacht werden können, nachdem er sich die Beispiele angesehen hat.

### Bezugszeichenliste

- 100: Erste-Hilfe-Koffer
- 10: Kofferschale
- 20: Griff
- 30: Einsatzteil
- 40: Verschluss
- 50: Stapelzentriereinrichtung
- 60: Oberflächenteilbereich

## Patentansprüche

1. Erste-Hilfe-Koffer (100), **dadurch gekennzeichnet, dass** mindestens ein Teilbereich des Erste-Hilfe-Koffers (100) ein phosphoreszierendes Material beinhaltet.

2. Erste-Hilfe-Koffer (100) nach einem der vorhergehenden Ansprüche, **dadurch gekennzeichnet, dass** der Erste-Hilfe-Koffer (100) zwei Kofferschalen (10) aufweist und die Teilbereiche, welche das phosphoreszierende Material beinhalten, an die Kofferschalen (10) anbringbare Anbauteile sind.

3. Erste-Hilfe-Koffer (100), nach Anspruch 2, **gekennzeichnet dadurch, dass** die anbringbaren Anbauteile zumindest aus einem der folgenden Elemente gewählt sind:
- Griff (20),
- Komponente des Griffs (20), insbesondere Einsatzteil (30),
- Verschluss (40),
- Komponente des Verschlusses (40), insbesondere Betätigungselement,
- Stapelzentriereinrichtung (50),
- Zierleiste.

4. Erste-Hilfe-Koffer (100) nach einem der Ansprüche 2 oder 3, **gekennzeichnet dadurch, dass** der Griff (20) und/oder eine Kofferschale (10) phosphoreszierendes Material beinhaltet bzw. beinhalten.

5. Erste-Hilfe-Koffer (100) nach einem der vorhergehenden Ansprüche, **gekennzeichnet dadurch, dass** das phosphoreszierende Material eine Nachleuchtdauer von mindestens 1 h, bevorzugt mindestens 2 h, besonders bevorzugt mindestens 3 h aufweist.

6. Erste-Hilfe-Koffer (100) nach einem der vorhergehenden Ansprüche, **dadurch gekennzeichnet, dass** der Massenanteil des phosphoreszierenden Materials in den Teilbereichen bzw. der Kofferschale (10) mindestens 10 %, bevorzugt mindestens 30 % beträgt.

7. Erste-Hilfe-Koffer (100) nach einem der vorhergehenden Ansprüche, **dadurch gekennzeichnet, dass** das phosphoreszierende Material ein Pigment ist, das Partikel aus SrAl₂O₄:Eu, Dy enthält, welche bevorzugt mittlere Durchmesser d₅₀ = 25 ± 4 µm und d₉₀ ≤ 60 µm aufweisen.

8. Erste-Hilfe-Koffer (100), nach einem der vorhergehenden Ansprüche, **dadurch gekennzeichnet, dass** der Erste-Hilfe-Koffer (100) befüllt ist mit zumindest einem aus:
- Pflaster und Verbandsmaterial,
- Einmalhandschuhen,
- Erste-Hilfe-Scheren und Pinzetten,
- Hygienemundschutz,
- Hygienekleidung,
- Notduschen und Augenspülung,
- Desinfektionsmittel und Spender dazu,
- Defibrillatoren und Zubehör,
- Beatmungsmasken.

9. Erste-Hilfe-Koffer (100) nach einem der vorhergehenden Ansprüche, **dadurch gekennzeichnet, dass** zumindest Oberflächenteilbereiche (60) metallisiert ist.

10. Verfahren zur Herstellung eines Erste-Hilfe-Koffers (100), das aufweist:
- Bereitstellen von zwei Kofferschalen (10) und einem Griff (20);
- Bereitstellen von an den Kofferschalen (10) und/oder dem Griff (20) anbringbaren Anbauteilen, die ein phosphoreszierendes Material beinhalten;
- Verbinden der beiden Kofferschalen (10) zu einem Erste-Hilfe-Koffer (100);
- Anbringen des Griffs (20) an eine Kofferschale (10);
- Anbringen der anbringbaren Anbauteile an den Kofferschalen (10) und/oder dem Griff (20).

11. Verfahren nach Anspruch 10, wobei
- die Kofferschalen (10) und der Griff (20) in einem ersten Spritzgussvorgang aus einem thermoplastischen Kunststoff, bevorzugt aus einem Acrylnitril-Butadien-Styrol-Kunststoff, hergestellt werden;
- die anbringbaren Anbauteile in einem zweiten Spritzgussvorgang aus einem thermoplastischen Kunststoff, bevorzugt aus einem Acrylnitril-Butadien-Styrol-Kunststoff, hergestellt werden, wobei dem Kunststoff das phosphoreszierende Material vor dem Spritzgussvorgang zugesetzt wird.

12. Verfahren nach Anspruch 11, wobei
vor dem ersten Spritzgussvorgang dem thermoplastischen Kunststoff für die Herstellung der Kofferschalen (10) und/oder des Griffs (20) phosphoreszierendes Material zugesetzt wird.

13. Verfahren nach einem der Ansprüche 10 bis 12 mit dem zusätzlichen Schritt:
- Metallisieren zumindest von Oberflächenteilbereichen (60) der Kofferschalen (10) und/oder des Griffs (20).

14. Verfahren nach Anspruch 13, wobei das Metallisieren durch die folgenden Schritte realisiert wird:
- Ätzen der Oberflächenteilbereiche (60) des Erste-Hilfe-Koffers (100) mit einer Lösung bestehend aus Chromsäure, Schwefelsäure und Wasser, wobei das Ätzen bei einer Temperatur von mind. 60 °C, bevorzugt bei 70 °C durchgeführt wird;
- Aktivieren der Oberflächenteilbereiche (60) mit Palladium, wobei das Palladium kolloidal gelöst und von einer Schutzkolloidhülle umgeben ist oder ionisch vorliegt;
- Benetzen der Oberflächenteilbereiche (60) mit einer Beschleunigerlösung, wobei die Beschleunigerlösung so gewählt ist, dass sie ionisch vorliegendes Palladium reduziert oder im Fall von kolloidal gelöstem Palladium die das kolloidale Palladium umgebende Schutzkolloidhülle entfernt;
- Chemisches Abscheiden von Nickel auf den Oberflächenteilbereichen (60);
- Galvanisches Abscheiden von Kupfer auf den vernickelten Oberflächenteilbereichen (60);
- Galvanisches Abscheiden von Nickel auf den verkupferten Oberflächenteilbereichen (60);
- Galvanisches Abscheiden von Chrom auf den durch galvanisches Abscheiden vernickelten Oberflächenteilbereichen (60);
- Trocknen der Oberflächenteilbereiche (60), bevorzugt bei einer Temperatur von 67 °C,
wobei zwischen den einzelnen Schritten die Oberflächenteilbereiche (60) mit Wasser, bevorzugt mit deionisiertem Wasser, gespült werden.
